# EUROPEAN PATENT APPLICATION

(11) **EP 2 613 240 A1**
(43) Date of publication of application: **10.07.2013**
(21) Application number: 12197719.3
(22) Date of filing: 18.12.2012
(51) Int. Cl.: G06F 3/0484, G06F 3/0481

(54) **Display apparatus and item selecting method using the same.**

(30) Priority: 09.01.2012 KR 20120002661
(71) Applicant: Samsung Electronics Co., Ltd, Gyeonggi-do 443-742 (KR)
(72) Inventor: Moon, Jong-bo, Gyeonggi-do (KR); Yoo, Ho-june, Seoul (KR); Kim, Byuk-sun, Seoul (KR); Kim, Yong-deok, Gyeonggi-do (KR); Lee, Hye-jeong, Seoul (KR); Choi, Sang-on, Gyeonggi-do (KR)
(74) Representative: Brandon, Paul Laurence

(57) **Abstract**

A method for selecting an item displayed on a display screen is provided. The method includes displaying a pointer (cursor) on the screen, receiving an input of user manipulation to move the pointer displayed on the screen, and if the pointer moves closer to the item into a predefined region surrounding the item and if the pointer is placed without overlapping at least a part of the item, displaying a graphical user interface (GUI) indicating that it is possible to select the item with the pointer.

## Description

### CROSS-REFERENCE TO RELATED APPLICATIONS

This application claims priority from Korean Patent Application No.10-2012-0002661, filed on January 9, 2012, in the Korean Intellectual Property Office, the disclosure of which is incorporated herein by reference in its entirety.

### BACKGROUND

### 1. Field

Apparatuses and methods consistent with exemplary embodiments relate to displaying and selecting an item, and more specifically, to a display apparatus which selects an item using a pointer displayed on a screen and an item selecting method thereof.

### 2. Description of the Related Art

Advancement in the electronic technology has led to development and distribution of various types of electronic apparatuses. The currently used electronic apparatuses generally employ display units so that the users can select desired functions while viewing the screens displayed on the electronic apparatuses.

One of the recently-developed technologies particularly supports a user moving a cursor to a desired icon and inputting a command to select the icon (e.g., clicking) to execute the function corresponding to the icon.

However, if the icon is too small or the cursor is set to move too fast, it is difficult for a user to manipulate the cursor to move the same to a desired icon precisely. The control by cursor movement can be particularly troublesome for the users of touch screens since touch screens are generally not efficient to input fine manipulations.

Accordingly, a display apparatus and a method thereof are required, which enable selecting of an icon to be easier and more precise.

### SUMMARY

Exemplary embodiments overcome the above disadvantages and other disadvantages not described above. Also, exemplary embodiments may not be required to overcome the disadvantages described above, and an exemplary embodiment may not overcome any of the problems described above.

According to one exemplary embodiment, there is provided a display apparatus which displays an adjacent item as a target of control by a pointer, if placed in the proximity to the adjacent item to thus improve user convenience, and an item selecting method thereof.

In one exemplary embodiment, a method for selecting an item among a plurality of items displayed on a display screen is provided, which may include displaying a pointer on the screen, receiving an input of user manipulation to move the pointer displayed on the screen, and displaying a graphical user interface (GUI) indicating that it is possible to select the item with the pointer if the pointer moves closer to the item and is placed without overlapping at least a part of the item.

The method may additionally include, determining that the pointer is proximate of the item if the pointer is placed in a proximate area of the item, wherein the proximate area does not overlap with proximate areas of other adjacent items, and has a preset range.

If the pointer enters the proximate area to the item, the range of the proximate area may be reset to at least one of the items including the item.

The re-setting the range of the proximate area may include increasing the range of the proximate area of the item so that the proximate area of the item does not overlap with another item, and decreasing the range of the proximate area to the other item so as to not overlap with the proximate area of the item which is increased.

If the pointer is moved out of the proximate area to the item, the method may include returning the range of the proximate area to at least one of the items including the re-set item.

If the pointer is placed nearer to the other item than to the item, the method may additionally include increasing the range of the proximate area of the other item and reducing the range of the proximate area of the item so as to not overlap with the proximate area of the other item which is increased.

If the pointer is moved near to the other adjacent item to the item, the method may additionally include displaying the GUI to indicate a connection between the other item and the pointer and that it is possible to select the other item with the pointer.

If the pointer approaches the item, the displaying the GUI may include displaying an edge line on a boundary line of the item, the edge line being extended to connect to the pointer.

The displaying the GUI may include displaying a connection between the pointer and the item in a manner in which the size of the pointer is decreased as the pointer moves nearer to the item, and increased as the pointer moves farther away from the item.

In a state that the GUI for indicating connection between the item and the pointer is displayed, the displaying the GUI may include displaying the GUI connecting the item and the pointer in gradually increasing transparency as the pointer is moved farther away from the item.

In one exemplary embodiment, a display apparatus is provided, which may include a display unit which displays an item among a plurality of items and a pointer on a screen, a user interface unit which receives an input of user manipulation to move the pointer displayed on the screen, and a control unit which controls so that, if the pointer moves closer to the item and if the pointer is placed without overlapping at least a part of the item, a graphical user interface (GUI) is displayed, indicating that it is possible to select the item with the pointer.

If the pointer is placed in a proximate area to the item, the control unit may determine that the pointer is proximate of the item, and wherein the proximate area does not overlap with proximate areas of other adjacent items, and has a preset range.

If the pointer enters the proximate area of the item, the control unit may re-set the range of the proximate area to at least one of the plurality of items.

The control unit may increase the range of the proximate area of the item in a manner to avoid overlap with the other item, and decrease the range of the proximate area to the other item so as not to overlap with the proximate area of the item which is increased.

If the pointer is moved out of the proximate area of the item, the control unit may return the range of the proximate area to at least one of the plurality of items including the re-set item, to a previous range.

If the pointer is placed nearer to the other item than to the item, the control unit may increase the range of the proximate area to the other item and reduce the range of the proximate area to the item so as to not overlap with the proximate area to the other item which is increased.

If the pointer is moved near to the other item adjacent to the item, the control unit may display the GUI to indicate a connection between the other item and the pointer and that it is possible to select the other item with the pointer.

If the pointer approaches the item, the control unit may display an edge line on a boundary line of the item, the edge line being extended to connect to the pointer.

The control unit may display the connection between the pointer and the item in a manner in which the size of the pointer is decreased as the pointer moves nearer to the item, and increased as the pointer moves farther away from the item.

In a state that the GUI for indicating a connection between the item and the pointer is displayed, the control unit may display the GUI connecting the item and the pointer in gradually increasing transparency as the pointer is moved farther away from the item.

In another exemplary embodiment, there is provided a method for selecting an item among a plurality of items displayed on a display screen. The method includes: displaying a pointer on the screen; receiving an input to move the pointer displayed on the screen; and associating the pointer with the item via a graphical user interface (GUI) when the pointer is moved to an area substantially near the item, wherein the association indicates that it is possible to select the item.

In yet another exemplary embodiment, there is provided a display apparatus. The display apparatus includes: a display unit which displays an item among a plurality of items and a pointer on a screen; and a control unit which controls so that the pointer is associated with the item via a graphical user interface (GUI) if the pointer is moved to an area substantially near the item, wherein the association indicates that it is possible to select the item.

In various exemplary embodiments, it is possible to control an item with a pointer even when the pointer is not overlain on the item; that is, it is possible to control the item with the pointer only if the pointer is placed in a proximate area to the item. Further, since the pointer and the item are displayed in connected form, the user is able to check which item can be controlled by the pointer. Accordingly, convenience of the user of the display apparatus increases.

### BRIEF DESCRIPTION OF THE DRAWINGS

The above and/or other aspects of exemplary embodiment will be more apparent by describing certain exemplary embodiments with reference to the accompanying drawings, in which:

FIG. 1 is a block diagram of a display apparatus according to an exemplary embodiment;

FIG. 2A-2C are views provided to explain a method for setting proximate area to a GUI element of the display apparatus of FIG. 1;

FIGs. 3A-3C are views provided to illustrate an example where a pointer is placed inside the proximate area of the item, where the item is displayed in varied shape so that the pointer and the item are connected with each other;

FIGs. 4A-4C are views provided to illustrate an example where a pointer is placed in the proximate area of the item, where an edge line is displayed on a boundary line of the item and partially extended to be connected to the pointer;

FIGs. 5A-5D are views provided to illustrate an example where the transparency of GUI connecting pointer and item is adjusted according to a distance between the pointer and the item;

FIGs. 6A-6D are views provided to illustrate an example in which the size of the pointer is varied according to the distance between the pointer and the item so that the pointer and the item are connected to each other; and

FIG. 7 is a flowchart provided to explain a method for selecting an item displayed on a display screen, according to an exemplary embodiment.

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiment. Accordingly, it is apparent that the exemplary embodiments can be carried out without those specifically defined matters. Also, well-known functions or constructions are not described in detail since they would obscure the description of exemplary embodiments with unnecessary detail.

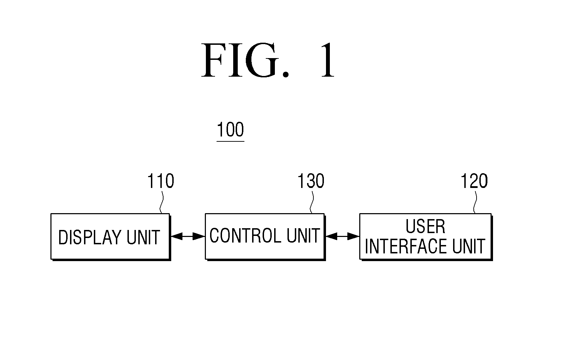

FIG. 1 is a block diagram of a display apparatus according to an exemplary embodiment. Referring to FIG. 1, the display apparatus 100 may include a display unit 110, a user interface unit 120, and a control unit 130. The display apparatus 100 of FIG. 1 may be implemented as various types of apparatuses that provide display function, such as TV mobile phone, PDA, tablet PC, laptop computer, or the like.

The display unit 110 may display an item and a pointer on the screen.

As used herein, the 'pointer' refers to the graphic which is moved on the screen according to a user's manipulation. The pointer may be particularly implemented as a cursor which occupies a predetermined area and can select an item, in various shapes including circle, rectangle, triangle, etc. Depending on needs, the size and shape of the pointer may vary.

As used herein, the 'item' may refer to an icon, a menu, a link object displayed on the web browser, a warning message, a search window, etc., which may be displayed on the screen and selected by the pointer. However, this is only an example, and any graphic objects that can be displayed on the screen and controlled by the pointer may be implemented as the items according to an exemplary embodiment.

The user interface unit 120 may receive a user's manipulation to move the pointer displayed on the screen. That is, the user interface unit 120 may receive a user's various inputs including relocating the pointer or selecting a specific item, or the like. To this purpose, the user interface unit 120 may be implemented as a key button, keypad, or the like, or implemented to receive user's manipulation inputted from a remote control device (not illustrated) such as remote control.

Meanwhile, if the display unit 110 is implemented as a touch screen, the user's manipulation to move the pointer may be inputted through the display unit 110. That is, the user may move the pointer displayed on the screen of the display unit 110 by touch-and-drag, or may select a specific item by touching on the pointer.

The control unit 130 may control the overall operation of the display apparatus 100. To be specific, if the user places the pointer on an item and inputs an execute command (e.g., click or touch), the control unit 130 may perform the function as set by the corresponding item. By way of example, if the item is an icon, an application, which is set according to the selected icon, may be executed. If the item is a link object of a web browser, access to the website at the linked address may be performed.

The control unit 130 may determine that an item is placed within the pointer, if a portion or entirety of the item is included in the pointer.

Additionally, the control unit 130 may determine that the item is placed within the pointer and perform the same operation, if the pointer moves and is placed in a proximity area near the item. The "proximate area of the item" may be a virtual area which may not be displayed on the screen, but can control the item. The proximate area of the item may not overlap with other proximate areas to other adjacent items, and may have a preset range.

Accordingly, if the pointer is not overlapped with the item but is placed in a preset area near the item, the control unit 130 may perform a preset function corresponding to the item in response to the user's execute command.

In the example explained above, the function set to the item is performed in response to the user's execute command. However, this is written for the illustrative purpose, and other examples are possible. Accordingly, a user may implement various manners of manipulations. For example, even when the pointer is placed in the proximate area of the item, the user may change the location of the item by dragging, etc.

Meanwhile, as the pointer approaches the item, the control unit 130 may control so that Graphical User Interface (GUI) is displayed, indicating that it is possible to select an item with the pointer when the pointer is placed at a location at which the pointer does not overlap at least a portion of the item. To be specific, the control unit 130 may determine when the pointer is placed in the proximate area of the item and display the GUI to connect the item and the pointer.

In the above example, the control unit 130 may display GUI to connect the item and the pointer by at least one of connecting line and connecting areas. By way of example, if the pointer approaches the item, the control unit 130 may display an edge line on a boundary of the item and extend a portion of the edge line to contact the pointer. In another example, the control unit 130 may change the display shape of the item as the pointer approaches the item so as to display the item and the pointer in connected form.

Further, the control unit 130 may change the size of the pointer so as to display the item and the pointer in connected form. To be specific, the control unit 130 may reduce the size of the pointer as the pointer approaches the item, while enlarging the size of the pointer as farther away from the item, so that the pointer and the item are displayed as connected to each other. By way of example, if the pointer is implemented in a circle shape, the control unit 130 may change the size of the pointer on the screen so that when displayed, the radius of the pointer in the proximate area of the item corresponds to a distance between the center of the pointer and the item.

Meanwhile, the control unit 130 may adjust the transparency of the GUI connecting the item and the pointer according to a distance between the pointer and the item. To be specific, in the state that the GUI is displayed in which the item and the pointer are connected to each other, as the pointer moves farther away from the item, the GUI connecting the pointer and the item may be displayed in gradually-increasing transparency. That is, the control unit 130 may display the GUI connecting the item and the pointer, if the pointer is placed in the proximate area of the item, and may display the GUI connecting the item and the pointer if the pointer moves in the proximate area of the item with the degree of transparency varied in proportion to the distance between the pointer and the item.

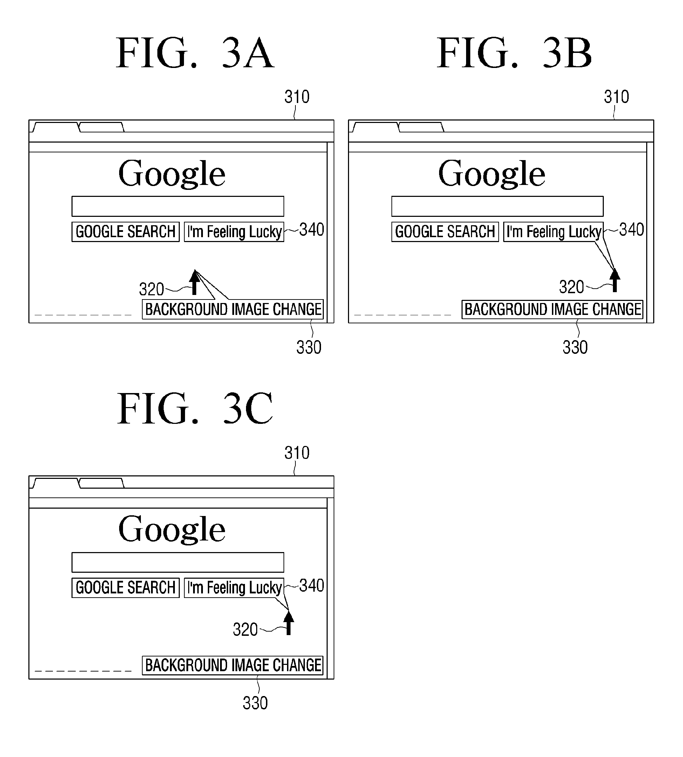

The above will be explained in greater detail below with reference to FIGS. 3 to 6.

Meanwhile, the control unit 130 may highlight an item as the pointer approaches the item. To be specific, if the pointer is placed within the proximate area of the item, the control unit 130 may control so that the item corresponding to the proximate area at which the pointer is placed is controlled, and so that the item for control by the pointer may be distinguishably displayed from the other items. The control unit 130 may also highlight the pointer with the item.

The control unit 130 may dynamically change the range of the proximate areas to items, according to the location of the pointer. That is, if the pointer enters the proximate area of a first item, the control unit 130 may re-set the range of the proximate area to at least one of the items including the first item.

To be specific, the control unit 130 may extend the range of the proximate area to the first item without overlapping the other items, while reducing the ranges of the proximate areas to the other items so that the proximate areas to the other items do not overlap the proximate area of the first item. That is, if the pointer is placed in the proximate area to the first item, the control unit 130 may extend the range of the proximate area to the first item to enable more efficient control on the first item.

Meanwhile, the control unit 130 may extend the range of the reduced proximate areas so as not to overlap the first item, if the pointer moves closer to the other items than the first item, while reducing the range of the proximate area to the first item so as not to overlap the proximate areas to the other items which are currently extended. That is, if the pointer is placed in the proximate area to the first item but closer to the other items than to the first item, the control unit 130 may extend the ranges of the proximate areas to the other items to enable more efficient control of the other items.

If the pointer moves closer to the other items near the first item, the control unit 130 may display GUI which displays the other items in connection with the pointer to indicate it is possible to select the other items with the pointer. That is, the control unit 130 may control so that the GUI that displays the pointer in connection with the other items nearer to the pointer is displayed, while the previous GUI that displays a pointer in connection with the first item is disappeared.

The control unit 130 may take into consideration the direction of the pointer with respect to the first item and the other items.

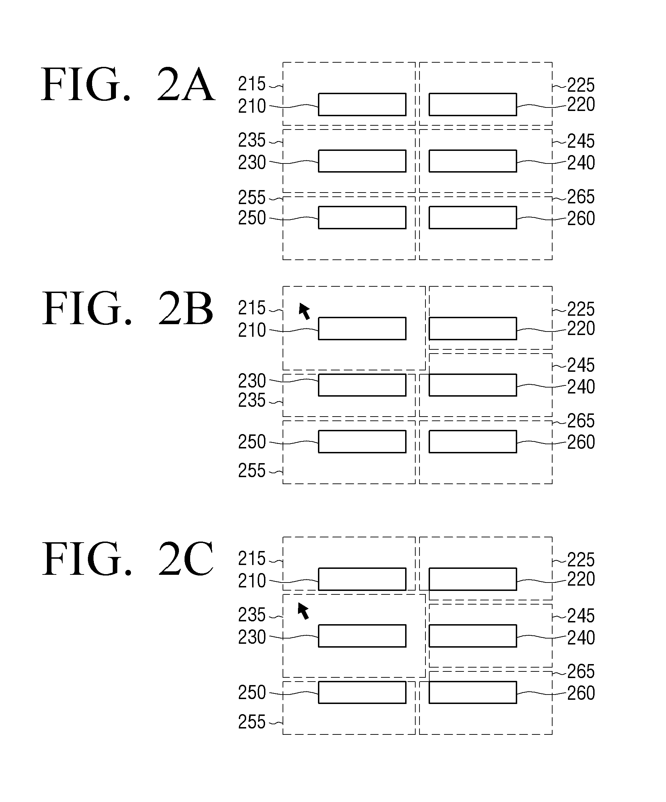

That is, if the pointer is placed in the same direction with respect to the first item and the other items, the control unit 130 may change the ranges of the proximate areas by considering the distances between the pointer and the other items. The 'same direction' may refer to a situation where at least one of the eight bearings of the pointer and the items is identical to each other. This will be explained in greater detail below with reference to FIG. 2.

If the pointer moves out of the proximate area of the first item, the control unit 130 may return the range of the proximate area to at least one of the other items including the re-set item.

Meanwhile, in changing the range of the proximate area to an item, the control unit 130 may consider the moving speed of the pointer. That is, if the moving speed of the pointer is faster than a preset level, the control unit 130 may not change the ranges of the proximate areas to items, and may change the range of the proximate areas according to the location of the pointer only if the moving speed of the pointer is slower than the preset level. The preset level may be set by the user.

FIGs. 2A-2C are provided to explain a method for setting proximate areas of items in the display apparatus of FIG. 1 according to various exemplary embodiments.

Referring to FIG. 2A, items 210, 220, 230, 240, 250, and 260 are displayed on the screen with corresponding proximate areas 215, 225, 235, 245, 255, and 265 set respectively. The proximate areas are virtual areas that are not displayed on the screen. The proximate areas are set so as not to overlap with other proximate areas. The proximate areas may have preset ranges in accordance with the sizes of the items and distances to the other items.

Meanwhile, referring to FIG. 2B, if the pointer 270 is moved by the manipulation of the user and placed in the proximate area 215 of the item 210, the range of the proximate area 215 of the item 210 is extended, while the ranges of the proximate areas 225, 235, and 245 of the items 220, 230, and 240 near to the item 210 are reduced. The extended proximate area 215 is not overlapped with the items 220, 230, 240.

If the pointer 270 keeps moving in the proximate area 215 of the item 210 and is placed closer to the item 230 than to the item 210, referring to FIG. 2C, the range of the proximate area 235 of the item 230 is extended, while the ranges of the proximate areas 215, 225, 245, 255, and 265 to the other items 210, 220, 240, 250, and 260 are reduced. The extended proximate area 235 does not overlap with the items 210, 220, 240, 250, 260.

The direction of the pointer may be taken into consideration. Referring to FIG. 2C, in terms of eight directions, the pointer 270 may be placed left-down direction of the item 210, and placed left-up direction to the item 230. That is, the pointer is placed on the left side to both item 210 and item 230. If one bearing of eight bearings is same as explained above, the range of the proximate area may be changed in consideration of the distance between the pointer and the item. That is, if the pointer is placed in the proximate area of the item 210 and at a closer distance to the item 230, the range of the proximate area 235 of the item 230 may be extended, while the range of the proximate area 215 of the item 210 may be reduced. Accordingly, the pointer 270 is placed in the proximate area 235 of the item 230 and can control the item 230.

Although the proximate area is drawn in rectangular shape in FIGs. 2A-2C, this is only for illustrative purpose. That is, the proximate area may be formed in various shapes such as circle, polygon, or the like in accordance with the shape of the item and distance to the other items.

Meanwhile, it has been explained above that the pointer and the item may be displayed in connection with each other, if the pointer is placed in the proximate area of the item. This will be explained in greater detail below.

FIGS. 3(A-C) to 6(A-D) are views provided to illustrate how the display apparatus of FIG. 1 displays pointer and the items in connection with each other in various exemplary embodiments.

Referring to FIG. 3A, if the pointer 320 is placed in the proximate area to a 'link object displayed on the web browser 310' (shortly, 'link object 330'), a triangular GUI is protruded from the link object 330 and connected to the pointer 320. Since the proximate area is the virtual area at which the item is controlled, the proximate area is not displayed on the screen. However, since the item and the pointer are displayed in connected form, the user can be provided with the visual information about the item controllable by the pointer.

Meanwhile, if the pointer 320 is moved according to the user's manipulation and enters the proximate area to the link object 340, referring to FIG. 3B, the pointer 320 and the link object 340 are displayed in connection with each other by the triangular GUI. Since the pointer 320 is moved out of the proximate area of the link object 330, the GUI that connects the pointer 320 and the link object 330 disappears. If the pointer 320 is moved to the proximate area of the link object 340, referring to FIG. 3C, the GUI is displayed to indicate the connection between the pointer 320 and the link object 340, but in different size which is varied in accordance with the distance between the pointer 320 and the link object 340.

Meanwhile, although the triangular GUI is protruded from the link object 330 and connects to the pointer in the exemplary embodiment explained above, this is explained only for illustrative purpose. Accordingly, the GUI may be implemented in various forms such as circles, rectangles, or the like.

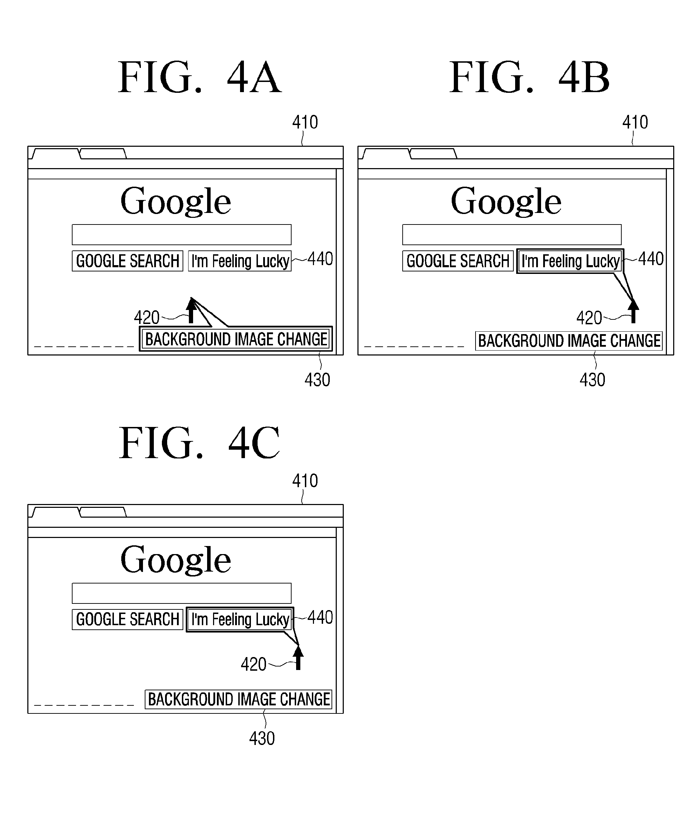

FIGS. 4A-4D are views provided to illustrate an example where the pointer is placed in the proximate area of the item and an edge line is displayed on a boundary of the item and partially extended to connect to the pointer.

Referring to FIG. 4A, if the pointer 420 is placed in the proximate area of a'link object displayed on a web browser 410' (i.e., 'link object 430'), an edge line may be displayed on a boundary of the link object 430 and partially extended to connect to the pointer 420. The edge line may be distinguishably displayed from the boundary line of the link object 430. Accordingly, the edge line may be displayed in different color from that of the boundary line of the link object 430, or in darker color than the boundary line of the link object 430, to be distinguishably displayed from the boundary line of the link object 430.

Meanwhile, if the pointer 420 keeps moving according to the user's manipulation and enters the proximate area of the link object 440, referring to FIG. 4B, the edge line is displayed on the boundary line of the link object 440, and partially extended to connect to the pointer 420. Since the pointer 420 moves out of the proximate area of the link object 430, the edge line of the link object 430 is not displayed anymore.

If the pointer 420 moves into the proximate area to the link object 440, referring to FIG. 4C, the edge line displayed with the link object 440 continuously displays that the pointer 420 and the link object 440 are connected.

Although the part of the edge line displayed on the boundary line of the item is in the form of line in the examples explained above, this is provided only for illustrative purpose. Accordingly, the part of the edge line connected to the pointer and the item may be displayed in various forms such as curves.

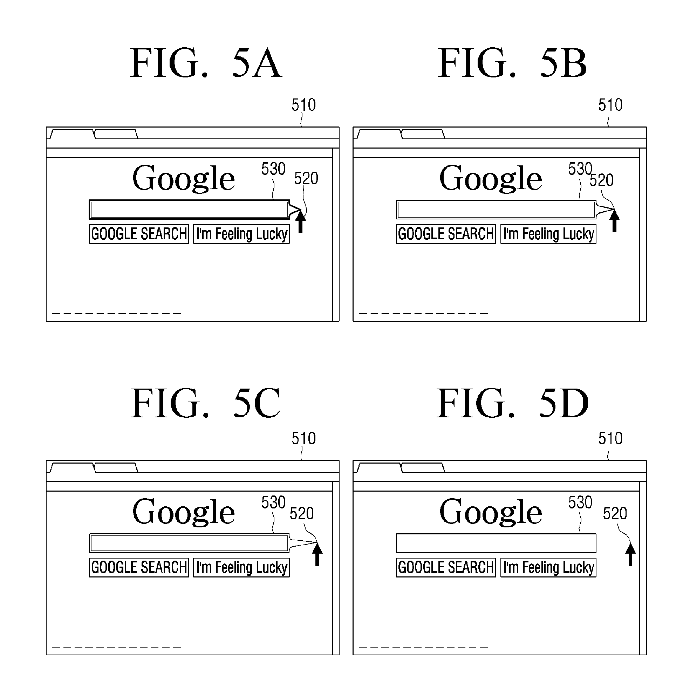

FIGS. 5A-5D are views provided to illustrate an example in which transparency of the GUI connecting the pointer and the item is adjusted in accordance with the distance between the pointer and the item.

Referring to FIG. 5A, if the pointer 520 is placed in the proximate area of the link object 530 displayed on the web browser 510, an edge line is displayed on the boundary line of the link object 530 and partially extended to connect to the pointer 520.

Then if the pointer 520 is moved by the user's manipulation farther away from the link object 530 in the proximate area of the link object 530, referring to FIGS. 5B and 5C, the display state of the edge line of the link object 530 may be gradually changed to more transparent state. Then if the pointer 520 moves out of the proximate area to the link object 530, referring to FIG. 5D, the connection between the pointer 520 and the link object 530 may not be displayed anymore.

Meanwhile, in the example explained above, the transparency of the edge line is varied in accordance with the distance between the pointer and the item. However, this should not be construed as limiting and other examples may be implemented. For example, if the edge line is displayed in a specific color, the brightness of the edge line may be varied in accordance with the distance between the pointer and the item. That is, as the pointer moves farther away from the item, the edge line may be displayed with gradually increasing or decreasing brightness.

Meanwhile, if the item is connected to the pointer in varied form of display, the size of the display form of the item may be varied in accordance with the distance between the pointer and the item. By way of example, if a triangular GUI is protruded from an item and connected to the pointer, the width of the triangle may be gradually decreased as the pointer moves farther away from the item.

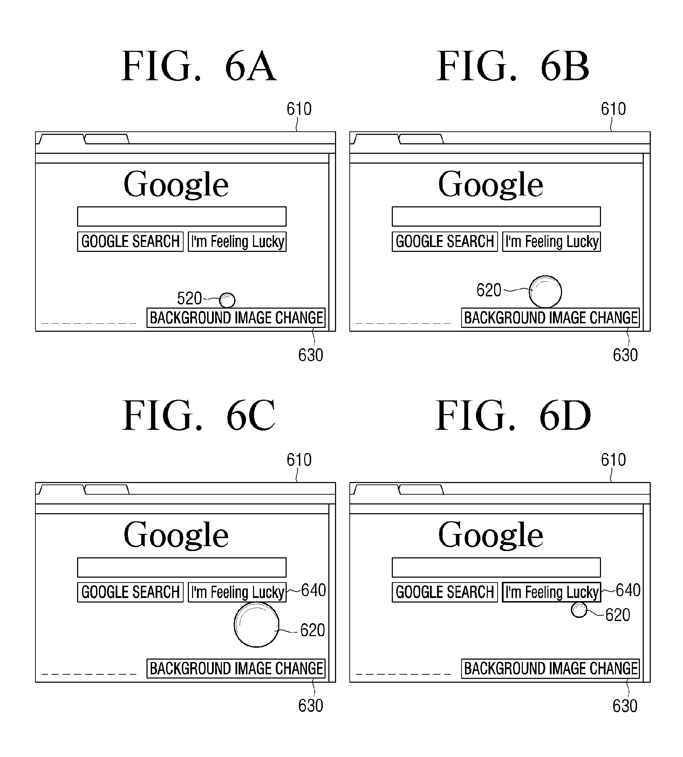

FIGS. 6A-6D are views provided to illustrate an example in which the size of the pointer is varied according to the distance between the pointer and the item so that the pointer and the item are connected to each other. To be specific, FIG. 6 illustrates an example in which the pointer is implemented in circular form.

Referring to FIG. 6A, if the pointer 620 is placed in the proximate area of the 'link object displayed on the web browser 610' (i.e., 'link object 630'), the pointer 620 may be displayed in contact with the link object 630.

Meanwhile, if the pointer 620 moves farther away from the link object 630 in the proximate area of the link object 630 (Fig. 6B), the size of the pointer 620 increases to contact the link object 630. To be specific, the size of the pointer 620 may be varied so that the distance between the center of the pointer 630 and the link object 630 corresponds to the radius.

Meanwhile, if the pointer 620 is moved out of the proximate area of the link object 630 and enters the proximate area of the link object 640, referring to FIG. 6C, the pointer 620 may be displayed in contact with the link object 640. Like the above-explained example, the radius of the pointer 620 may be determined in accordance with the distance between the center of the pointer 620 and the link object 640. Accordingly, as illustrated in FIG. 6D, the size of the pointer 620 may gradually decrease as the pointer 620 moves closer to the link object 640.

Meanwhile, in the exemplary embodiment explained above, when the pointer 'contacts' the link object, this may refer to a state in which the boundary line of the pointer contacts the boundary line of the link object. However, the 'contact' may also refer to a state in which the pointer and the link object as displayed, are overlapped with each other. That is, the 'contact' may be interpreted as all forms of connection between the pointer and the links.

Meanwhile, although the circular form of the pointer is used in the examples explained above, one will understand that the pointer may be implemented in various forms such as triangles or rectangles with respect to how the pointer is displayed in connection with the item.

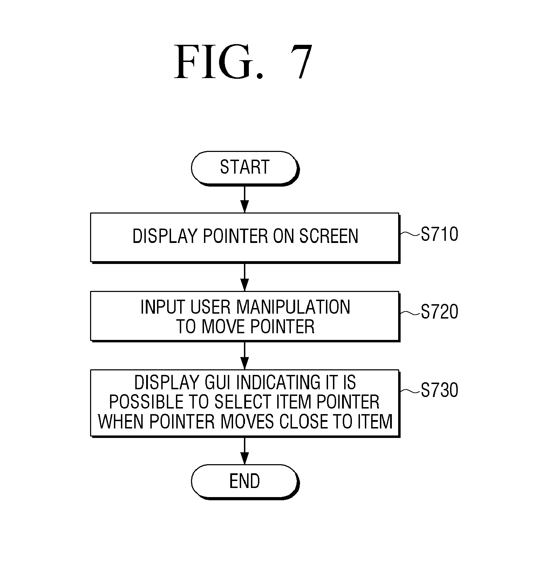

FIG. 7 is a flowchart provided to explain a method for selecting an item displayed on the display screen, according to an exemplary embodiment. Referring to FIG. 7, at S71 0, the pointer is displayed on the screen. At S720, a user manipulates, via an input, the pointer such that it is moved on the screen.

Meanwhile, at S730, if the pointer approaches an item and is at a location where the pointer does not overlap at least a part of the item, a GUI may be displayed, indicating that it is possible to select the item with the pointer.

To be specific, if the pointer approaches the item, an edge line may be displayed on the boundary line of the item and partially extended to connect to the pointer. Alternatively, as the pointer approaches the item, the display form of the item may be varied to indicate the connection between the item and the pointer.

Alternatively, the connection between the pointer and the item may be displayed in a manner in which the size of the pointer decreases as the pointer moves closer to the item, and increased as the pointer moves farther away from the item.

In an exemplary embodiment, the GUI indicating connection between the item and the pointer may be displayed in gradually increasing transparency, as the pointer is moved farther away from the item.

Meanwhile, if the pointer is placed in the proximate area of the item, it may be determined that the pointer is proximate to the item. The range of the proximate area may be preset so that there is no overlapping with the proximate areas of the other items.

If the pointer enters the proximate area of a first item, the range of the proximate area to at least one of items including the first item may be varied. To be specific, the range of the proximate area of the first item may be increased in a manner so as to avoid overlapping with the other items, and the ranges of the proximate areas of the other items may be decreased so as not to overlap with the proximate area to the first item which is increased in size.

Meanwhile, if the pointer is placed nearer to a second item than to the first item, the range of the proximate area to the second item, which is in reduced size, may be increased, while the ranges of the other items may be reduced so as not to overlap with the proximate area to the second item.

Accordingly, if the pointer is moved nearer to the second item located near the first item, a GUI may be displayed, indicating connection between the second item and the pointer and that it is possible to select the second item with the pointer.

Meanwhile, if the pointer is moved out of the proximate area of an item, the size of the proximate area to at least one of the items including the re-set item may be returned to the original state.

Since the method of setting the proximate area to an item is explained above with reference to FIGs. 2A-2C, repetitious explanation and illustration thereof will be omitted for the sake of brevity.

Meanwhile, a program to implement methods according to various exemplary embodiments may be stored on various types of recording media and used.

To be specific, codes to execute the methods of the exemplary embodiments may be recorded on various types of terminal readable recording media including, but not limited to, RAM (Random Access Memory), flash memory, ROM (Read Only Memory), EPROM (Erasable Programmable ROM), EEPROM (Electronically Erasable and Programmable ROM), register, hard disk, removable disk, memory card, USB memory, CD-ROM, or the like.

The foregoing embodiments and advantages are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for selecting an item among a plurality of items displayed on a display screen, the method comprising:
displaying a pointer on the screen;
receiving an input of user manipulation to move the pointer displayed on the screen;
and
displaying a graphical user interface (GUI) indicating that it is possible to select the item with the pointer if the pointer moves closer to the item and is placed without overlapping at least a part of the item.

2. The method of claim 1, further comprising determining that the pointer is proximate to the item if the pointer is placed in a proximate area of the item, wherein the proximate area does not overlap with proximate areas of other adjacent items, and has a preset range.

3. The method of claim 2, further comprising re-setting the range of the proximate area of at least one of the plurality of items if the pointer enters the proximate area of the item.

4. The method of claim 3, wherein the re-setting the range of the proximate area comprises increasing the range of the proximate area of the item so that the proximate area of the item does not overlap with another item, and decreasing the range of the proximate area to said another item so as not to overlap with the proximate area of the item which is increased.

5. The method of claim 3, further comprising returning the range of the proximate area of said at least one of the plurality of items if the pointer is moved out of the proximate area of the item.

6. The method of claim 4, further comprising, if the pointer is placed nearer to said another item than to the item, increasing the range of the proximate area to said another item, and reducing the range of the proximate area of the item so as to not overlap with the proximate area of said another item which is increased.

7. The method of anyone of claims 1 to 6, further comprising, if the pointer is moved near to another adjacent item to the item, displaying the GUI to indicate a connection between said another item and the pointer and that it is possible to select said another item with the pointer.

8. The method of anyone of claims 1 to 7, wherein, if the pointer approaches the item, the displaying the GUI comprises displaying an edge line on a boundary line of the item, the edge line being extended to connect to the pointer.

9. The method of anyone of claims 1 to 8, wherein the displaying the GUI comprises displaying a connection between the pointer and the item so that the size of the pointer is decreased as the pointer moves nearer to the item, and increased as the pointer moves farther away from the item.

10. The method of anyone of claims 1 to 9, wherein, in a state in which the GUI for indicating a connection between the item and the pointer is displayed, the displaying the GUI comprises displaying the GUI connecting the item and the pointer in gradually increasing transparency as the pointer is moved farther away from the item.

11. A display apparatus, comprising:
a display unit which displays an item among a plurality of items and a pointer on a screen;
a user interface unit which receives an input of user manipulation to move the pointer displayed on the screen; and
a control unit which controls so that, if the pointer moves closer to the item and if the pointer is placed without overlapping at least a part of the item, a graphical user interface (GUI) is displayed, indicating that it is possible to select the item with the pointer.

12. The display apparatus of claim 11, wherein, if the pointer is placed in a proximate area of the item, the control unit determines that the pointer is proximate to the item, and wherein the proximate area does not overlap with proximate areas of other adjacent items and has a preset range.

13. The display apparatus of claim 12, wherein, if the pointer enters the proximate area of the item, the control unit re-sets the range of the proximate area of at least one of the plurality of items.

14. The display apparatus of claim 13, wherein the control unit increases the range of the proximate area of the item so as to avoid overlap with another item, and decreases the range of the proximate area to said another item so as to not overlap with the proximate area of the item which is increased.

15. The display apparatus of claim 13, wherein, if the pointer is moved out of the proximate area of the item, the control unit returns the range of the proximate area of the at least one of the plurality of items including the re-set item to a previous range.
